# EUROPEAN PATENT SPECIFICATION

(11) **EP 3 222 151 B1**
(45) Date of publication and mention of the grant of the patent: **22.08.2018**
(21) Application number: 14906174.9
(22) Date of filing: 16.12.2014
(51) Int. Cl.: A23K 50/00, A23K 10/40

(54) **PET FOOD FOR CATS AND METHOD FOR MANUFACTURING SAME**
HAUSTIERFUTTER FÜR KATZEN UND VERFAHREN ZUR HERSTELLUNG DAVON
ALIMENT POUR ANIMAUX DE COMPAGNIE DESTINÉS AUX CHATS ET SON PROCÉDÉ DE FABRICATION

(30) Priority: 18.11.2014 JP 2014233963
(43) Date of publication of application: 27.09.2017
(73) Proprietor: Unicharm Corporation, Ehime 799-0111 (JP)
(72) Inventor: YOSHIDA Kotaro, Itami-shi Hyogo 664-0831 (JP); INOUE Kazunori, Itami-shi Hyogo 664-0831 (JP); MIYAMOTO Katsunori, Itami-shi Hyogo 664-0831 (JP)
(74) Representative: Dolleymores
(86) International application number: PCT/JP2014/083234
(87) International publication number: WO 2016/079886

(56) References cited:
- WO-A1-99/47000
- WO-A1-2013/074466
- JP-A- S6 439 953
- JP-A- S62 296 847
- JP-A- 2006 158 265
- JP-A- 2008 029 339
- JP-A- 2013 066 483
- JP-A- 2014 008 045

## Description

### Technical Field

The present invention relates to granular pet food for cats and a method of producing pet food for cats.

### Background Art

As a type of granular pet food, a dry type pet food having a small amount of moisture and a semi-moist type pet food having a relatively large amount of moisture are exemplified. The dry type pet food is crispy and has a chewy texture and the semi-moist type pet food is formed of granules softer than those of the dry type pet food.

In a case of cats, since the palatability of pet food tends to be decreased when the pet food has a large amount of moisture, the entire granular pet food for cats on the market are a dry type pet food.

In a case of dogs, since such a tendency is not shown, both types of pet food are on the market.

For example, PTL 1 discloses a method of producing a semi-moist type pet food and describes that pet food for dogs having a product water content of 19% to 24% by mass is produced by granulating a raw ingredient mixture formed by blending lard and glycerin in the examples.

### Citation List

### Patent Literature

[PTL 1] Japanese Unexamined Patent Application, First Publication No. 2006-158265

JP S64 39953 A discloses a solid pet food having less than or equal to 10% moisture content and 6 to 13 mm grain size. The surfaces of the grain are subjected to an oil coating treatment, followed by a roasting treatment and subsequent coating with a tasty flavour.

WO 99/47000 relates to a dual component, increased palatability animal food product having an inner component surrounded by an outer matrix. The inner component is a mixture of lipids and solids.

WO 2005/025322 A2 discloses compositions for animal consumption that tend to aid in weight loss or reducing weight gain, and particularly compositions that comprise one or more medium chain fatty acid triglycerides.

### Summary of Invention

### Technical Problem

However, in some cases, cats with no teeth or weak teeth due to old age, illness, or the like are unable to eat dry type pet food for cats because the food is hard.

An object of the present invention is to provide pet food for cats which is formed of soft granules and has excellent palatability.

### Solution to Problem

The present invention provides the granular pet food for cats of independent claim 1 and the method of producing the pet food for cats of independent claim 4. The dependent claims specify preferred but optional features.

### Advantageous Effects of Invention

According to the present invention, it is possible to provide pet food for cats which is formed of granules softer than those of dry type pet food for cats in the related art and also has excellent palatability.

### Description of Embodiments

In the present specification, pet food is a collection of food granules. Typically, a predetermined amount of food granules are stored in a packaging container and provided as a product. As the packaging container, a container capable of holding the water content of the content is used.

The pet food may be a collection of one type of food granules or a mixture of two or more kinds of food granules.

In the present specification, the water content is a value obtained by the following measurement method.

An object to be measured is ground using a grinder so as to pass through a sieve having an opening diameter of 1 mm and then used as an analytical sample. 2 g to 5 g of the analytical sample is accurately weighed, put into an aluminum weighing dish (after the sample has been dried in advance, the weight thereof is accurately weighed), dried at a temperature of 135 ± 2°C for 2 hours, and left to be cooled in a desiccator. Next, the weight thereof is accurately weighed, and then the water content is acquired from a difference between the weights weighed before and after the drying.

In the present specification, the water content of the food granules is a value obtained by setting the date of when the food granules which are subjected to a granulation process and a coating process and cooled at room temperature are accommodated into a packaging container to be sealed, as the date of manufacture and performing a measurement immediately after the packaging container has been opened within 30 days from the date of manufacture or is a value obtained by a measurement under the conditions similar to the conditions described above.

The product water content of pet food is a value obtained by performing a measurement immediately after a product in which a mixture including one or two or more kinds of food granules is accommodated into a packaging container, has been opened within 30 days from the date of manufacture or is a value obtained by a measurement under the conditions similar to the conditions described above.

In a case where pet food is formed of one type of food granules, the water content of the food granules and the product water content of pet food indicate the same water content.

In the present specification, the value of water activity (Aw) of food granules is a value obtained by performing a measurement on a sample prepared by grinding the food granules at a measurement temperature of 25°C using a known water activity measuring device.

For example, the measurement can be carried out using a water activity measuring device "Novasina IC-500 AW-LAB (product name, manufactured by DKSH Japan K.K.)".

In the present specification, the water activity (Aw) of food granules is a value obtained by a measurement immediately after a pet food product produced by accommodating the food granules into a packaging container to be sealed has been opened within 30 days from the date of manufacture or is a value obtained by a measurement under the conditions similar to the conditions described above.

### <Pet food for cats>

The pet food for cats according to the present embodiment is a granular pet food and the product water content thereof is in a range of 10% to 30% by mass.

When the product water content thereof is greater than or equal to the lower limit of the above-described range, excellent softness can be obtained. Further, when the product water content thereof is less than or equal to the upper limit, excellent storability can be obtained.

The product water content is more preferably in a range of 10% to 20% by mass and still more preferably in a range of 10% to 16% by mass.

### <Food granules>

The pet food for cats according to the present embodiment contains one or more types of food granules F, each of which is provided with a coating layer containing specific vegetable fats and oils on a surface or in the vicinity of the surface of a granule that contains a humectant.

The food granules F are obtained by coating a granulated material formed by granulating a raw ingredient mixture that contains a humectant.

In the present specification, the term "coating" means that a liquid is applied to a surface of a granulated material so that the liquid adheres to the surface of the granule and also includes a case where a portion of the applied liquid infiltrates the granule. The expression "the surface has a coating layer" means a state in which a liquid applied to a surface of a granulated material is unlikely to infiltrate the surface thereof and a coating layer is formed on the surface of the granulated material. The expression "the vicinity of the surface has a coating layer" means a state in which a part of a liquid applied to the surface of a granulated material infiltrates the granulated material and a coating layer is formed by the liquid adhering onto the surface of the granulated material and the liquid having infiltrated into the vicinity of the surface.

The water content of the food granules F is preferably in a range of 10% to 30% by mass, more preferably in a range of 10% to 20% by mass, and still more preferably in a range of 10% to 16% by mass.

### [Coating layer]

The coating layer of food granules F contains vegetable fats and oils having an iodine value of 100 or less and may further contain animal fats and oils other than the vegetable fats and oils.

The coating layer of the food granules F may contain components other than fats and oils (for example, protein hydrolyzates, seafood, seasonings, amino acids, brewer's yeast, and yeast extracts). The content of the components other than fats and oils is preferably 10% by mass or less, more preferably 8% by mass or less, and still more preferably 5% by mass or less with respect to the total amount of fats and oils.

According to a first example of food granules F, food granules F are food granules F1 obtained by coating a granulated material with a liquid containing fats and oils, and the fats and oils contained in the liquid are only vegetable fats and oils.

According to a second example of food granules F, food granules F are food granules F2 obtained by coating a granulated material with a liquid containing fats and oils, and the fats and oils contained in the liquid are a mixture of vegetable fats and oils and animal fats and oils.

According to an embodiment of food granules F, food granules F are food granules F3 obtained by coating a granulated material with a first liquid containing fats and oils and then coating the granulated material with a second liquid containing fats and oils, and the fats and oils contained in the first liquid include animal fats and oils and the only fats and oils contained in the second liquid are vegetable fats and oils. It is preferable that the fats and oils contained in the first liquid are only animal fats and oils.

The coating layer in the food granules F3 of the embodiment includes an inner layer formed by coating the first liquid and an outer layer formed by coating the outside of the inner layer with the second liquid.

### (Vegetable fats and oils)

Fats and oils having an iodine value of 100 or less are non-drying oils, and one or more selected from the group consisting of olive oil, palm oil, palm kernel oil, coconut oil, coconut butter and camellia oil are preferable.

Excellent palatability is obtained when feeding cats by providing a coating layer that contains vegetable fats and oils having an iodine value of 100 or less on the granulated material. Since non-drying oils having an iodine value of 100 or less is relatively and unlikely to be oxidized, excellent long-term storability is obtained.

Particularly from the viewpoint of obtaining a high palatability of pet food for cats, it is preferable that vegetable fats and oils constituting the coating layer of food granules F contain palm oil. Further, the proportion of palm oil is preferably 50% by mass or greater, more preferably 70% by mass or greater, and particularly preferably 100% by mass with respect to the vegetable fats and oils.

### (Animal fats and oils)

The animal fats and oils contained in the coating layer are not limited as long as the fats and oils are edible, and examples thereof include chicken oil, lard, beef tallow (fat), and milk fat. These are fats and oils having an iodine value of 100 or less and excellent oxidation stability. The animal fats and oils may be used alone or in combination of two or more kinds thereof.

In the food granules F1 of the first example, the content of the vegetable fats and oils constituting the coating layer is preferably in a range of 1% to 15% by mass and more preferably in a range of 1.5% to 13% by mass with respect to the total content of food granules F. When the content of the vegetable fats and oils is in the above-described range, effects of improving the palatability for cats as a result of providing the coating layer can be easily obtained sufficiently.

In the food granules F2 of the second example, the total content of the animal fats and oils and the vegetable fats and oils constituting the coating layer is preferably in a range of 1% to 15% by mass and more preferably in a range of 1.5% to 13% by mass with respect to the total content of the food granules F. When the content of the vegetable fats and oils is in the above-described range, effects of improving the palatability for cats as a result of providing the coating layer can be easily obtained sufficiently.

The content of the animal fats and oils contained in the coating layer is preferably in a range of 1% to 12% by mass and more preferably in a range of 1.5% to 7% by mass with respect to the total content of the food granules F.

The content of the vegetable fats and oils contained in the coating layer is preferably in a range of 1% to 12% by mass and more preferably in a range of 1.5% to 6% by mass with respect to the total content of the food granules F.

Further, the ratio of the vegetable fats and oils to the animal fats and oils contained in the coating layer, which is the mass ratio of the vegetable fats and oils to the animal fats and oils, is preferably in a range of 5:1 to 1:2, more preferably in a range of 4:1 to 1:2, and particularly preferably in a range of 2:1 to 1:2. When the mass ratio thereof is in the above-described range, excellent palatability for cats can be easily obtained.

In the food granules F3 of the embodiment, the total content of the animal fats and oils and the vegetable fats and oils constituting the coating layer is preferably in a range of 1% to 15% by mass and more preferably in a range of 1.5% to 13% by mass with respect to the total content of the food granules F. When the content of the vegetable fats and oils is in the above-described range, effects of improving palatability for cats resulting from providing the coating layer can be easily obtained sufficiently.

The content of the animal fats and oils contained in the coating layer is preferably in a range of 1% to 12% by mass and more preferably in a range of 1.5% to 7% by mass with respect to the total content of the food granules F.

The content of the vegetable fats and oils contained in the coating layer is preferably in a range of 1% to 12% by mass and more preferably in a range of 1.5% to 6% by mass with respect to the total content of the food granules F.

Further, the ratio of the vegetable fats and oils to the animal fats and oils contained in the coating layer, which is the mass ratio of the vegetable fats and oils to the animal fats and oils, is preferably in a range of 5:1 to 1:2, more preferably in a range of 4:1 to 1:2, and particularly preferably in a range of 2:1 to 1:2. When the mass ratio thereof is in the above-described range, excellent palatability for cats can be easily obtained.

### [Humectant]

The food granules F contain a humectant. The humectant is a component added for holding the moisture within the food granules and reducing the water activity. The humectant contributes to the softness of the food granules. In other words, the food granules F become softer as the water content is increased, but the food granules F can be made softer without increasing the water content by containing a humectant. When the water content is small, excellent palatability for cats can be easily obtained.

As a humectant, glycerin is preferable. The humectant may be used alone or in combination of two or more kinds thereof. Since the pet food of the present embodiment is for cats, propylene glycol known as a humectant is not used.

Glycerin is typically used in a state of an aqueous solution. The concentration of glycerin in a glycerin aqueous solution is not particularly limited. For example, the concentration thereof is preferably in a range of 80% to 100% by mass and more preferably in a range of 80% to 85% by mass.

Regarding the amount of the humectant to be blended, the total amount of the humectant (not including water as a solvent) is preferably in a range of 5% to 20% by mass, more preferably in a range of 7% to 17% by mass, and particularly preferably in a range of 8% to 15% by mass with respect to the total amount of the food granules F.

From the viewpoints of suppressing the water content of the food granules F to be low and easily obtaining excellent softness, it is preferable that the food granules F contain 5% to 20% by mass of the humectant and the water content of the food granules F is preferably in a range of 10% to 16% by mass. Further, it is particularly preferable that the food granules F contain 8% to 15% by mass of the humectant and the water content of the food granules F is preferably in a range of 10% to 14% by mass.

### [Raw ingredient mixture]

As the raw ingredients other than the humectant constituting the food granules F, known raw ingredients used for pet food for cats can be suitably used.

Examples of the raw ingredients include cereals (such as corn, wheat, rice, barley, oats, and rye), beans (such as whole soybeans), starch (such as wheat starch, corn starch, rice starch, potato starch, tapioca starch, sweet potato starch, and sago starch), vegetable protein (such as corn gluten meal, defatted soybean meal, and soybean protein), meat (such as chicken, beef, pork, venison, meals (such as chicken meal, pork meal, beef meal, and mixed meals of these)), seafood (such as fish and meals (fish meal)), brewer's yeast, yeast extracts, vegetables, fats and oils, saccharides (such as glucose and maltose), additives (such as vitamins, minerals, an amino acid, flavoring raw ingredients, colorants, pH adjusting agents, preservatives, emulsifiers, animal raw ingredient extracts, vegetable raw ingredient extracts, and palatability enhancers), and external additives (such as animal raw ingredient extracts, vegetable raw ingredient extracts, and palatability enhancers). The meals indicate powder products obtained by compressing and finely grinding meat or seafood.

The external additives indicate components to be added (externally added) to a raw ingredient mixture after being granulated. In the present embodiment, it is preferable that external additives are applied onto a surface of the granulated material after the surface of the granulated material has been coated with only vegetable fats and oils or animal fats and oils and vegetable fats and oils.

It is preferable that the composition of the raw ingredient mixture is formulated according to the nutrient composition of the food granules expected to be obtained.

### <Other food granules>

The pet food for cats according to the present embodiment may contain other food granules other than the food granules F in a range in which the product water content satisfies the range of 10% to 30% by mass.

The content of food granules F is preferably 50% by mass or greater, more preferably 75% by mass or greater, and particularly preferably 100% by mass with respect to the total content of food granules constituting the pet food for cats.

### <Method of producing pet food for cats>

A method of producing pet food for cats according to the present embodiment includes a granulation process of granulating a raw ingredient mixture to obtain a granulated material; a process of coating the granulated material with a liquid containing vegetable fats and oils without performing a drying process, and a process of producing the food granules F1 of the first example or the food granules F2 of the second example.

Further, the food granules F3 of the embodiment is produced by a method of performing the coating process in two stages. In other words, the method of producing food granules according to the embodiment includes a granulation process of granulating a raw ingredient mixture to obtain a granulated material; a process of coating the granulated material with a first liquid containing animal fats and oils without performing a drying process, cooling the resulting granulated material, and coating the granulated material with a second liquid containing vegetable fats and oils; and a process of producing the food granules F3 of the embodiment.

### [Preparation of raw ingredient mixture]

First, raw ingredients constituting food granules are mixed using a known method to obtain a raw ingredient mixture.

Further, water (the raw ingredient mixture contains water as a solvent) is added to the raw ingredient mixture such that the water content of the food granules is set to be a desired value.

### [Granulation process]

In the present invention, the term "granulating" means forming the raw ingredient mixture to have a shape suitable for cats for eating the pet food.

As a method of forming (granulating) the raw ingredient mixture into a granular shape, a method of obtaining a granulated material, which is a puffed granule, by performing a puffing process or a method of obtaining a granulated material, which is a non-puffed granule, without performing a puffing process may be used.

The "puffing process" indicates a process of generating gas inside the raw ingredient mixture using a technique of carrying out heating, fermentation, a chemical reaction, or pressure reduction. In the puffing process, when gas is generated, the volume of the raw ingredient mixture is increased so as to develop porous properties. Further, when the volume of the raw ingredient mixture is increased, the bulk density thereof is decreased. Before, after, or simultaneously with the puffing process, puffed granules are obtained by forming the raw ingredient mixture into a granular shape.

Examples of the method of obtaining non-puffed granules include a method of extruding and forming a raw ingredient mixture without performing the puffing process and a method of performing a die cutting process.

From the viewpoint of easily obtaining excellent softness of food granules, puffed granules are more preferable than non-puffed granules.

Puffed granules can be produced according to a known method using an extruder.

As the method of producing puffed granules using an extruder, for example, a method described in "Small Animal Clinical Nutrition 4th Edition" (edited by Michael S. Hand, Craig D. Thatcher, Rebecca L. Remillard, and Philip Roudebusg, published by Mark Morris Associates; 2000; pp. 157 to 190) can be used.

The shape of the granulated material is not particularly limited as long as the shape is suitable for cats to eat the pet food. Examples thereof include a circular shape, an elliptical shape, a polygonal shape, a donut shape, a heart shape, a star shape, and a fish shape.

The size of the granulated material is not particularly limited, but it is preferable that both the shortest diameter and the longest diameter thereof are respectively in a range of 3 mm to 30 mm.

### [Coating process]

Next, food granules F are obtained by coating the granulated material obtained by the granulation process with a liquid containing fats and oils (coating process).

The granulated material is coated without performing a drying process. The drying process indicates an operation performed to positively dry the granulated material. Examples thereof include a process of drying a granulated material by blowing hot air thereto; a process of drying a granulated material by reducing the pressure; a process of drying a granulated material by performing freeze drying; and a process of drying a granulated material by performing a frying treatment in an oil. Excellent softness of food granules can be easily obtained by coating the granulated material without performing a drying process.

### (First example)

According to a first example of a coating process, the granulated material is coated with a coating solution containing vegetable fats and oils as fats and oils to obtain the food granules F1.

The coating method is not particularly limited, and a known method in production of pet food, food products, or the like of the related art can be used. For example, a coating solution can be made to adhere to the surface of the granulated material using a method of spraying a coating solution to the food granules; a method of putting the food granules and a coating solution into a container such as a tank and stirring the content inside the tank using a stirrer or the like; or a method of shaking the container. A part of the coating solution may infiltrate the granulated material.

Further, when a vacuum coating method is used, the coating solution applied to the surface of the granulated materials is likely to infiltrate the granulated material. The vacuum coating method can be performed using a known technique.

The temperature of the granulated material at the time of coating is not particularly limited, but is preferably in a range of 25°C to 70°C and more preferably in a range of 40°C to 60°C.

The temperature of the coating solution is not particularly limited as long as the fats and oils are not solidified, but it is preferable that the temperature thereof is as low as possible in order to prevent oxidation of the fats and oils. For example, in a case of palm oil, the temperature thereof is preferably in a range of 40°C to 60°C.

### (Second example)

According to a second example of a coating process, the granulated material is coated with a coating solution containing a mixture of vegetable fats and oils and animal fats and oils as fats and oils to obtain the food granules F2.

As the coating method, the same coating method as in the first example of the coating process can be used.

The temperature of the granulated material at the time of coating is not particularly limited, but is preferably in a range of 25°C to 70°C and more preferably in a range of 40°C to 60°C.

The temperature of the coating solution is not particularly limited as long as the fats and oils are not solidified, but it is preferable that the temperature thereof is as low as possible in order to prevent oxidation of the fats and oils. For example, in a case where a mixture of beef tallow or crude beef tallow and palm oil is used as fats and oils, the temperature thereof is preferably in a range of 40°C to 60°C.

### (Embodiment)

According to an embodiment of a coating process, the granulated material is coated with a first liquid containing fats and oils, cooled, and then coated with a second liquid containing fats and oils, thereby obtaining the food granules F3. The fats and oils in the first liquid contain animal fats and oils and the fats and oils in the second liquid are vegetable fats and oils.

As the method of coating the granulated material with the first liquid and the method of coating the granulated material with the second liquid, the same coating method as in the first example of the coating process can be used.

The temperature of the granulated material at the time of coating the granulated material with the first liquid is not particularly limited, but is preferably in a range of 25°C to 70°C and more preferably in a range of 40°C to 60°C.

The temperature of the first liquid is not particularly limited as long as the fats and oils are not solidified, but it is preferable that the temperature thereof is as low as possible in order to prevent oxidation of the fats and oils. For example, in a case where beef tallow or crude beef tallow is used as animal fats and oils, the temperature thereof is preferably in a range of 40°C to 60°C.

The temperature of the granulated material at the time of coating the granulated material with the second liquid is not particularly limited, but is preferably in a range of 25°C to 70°C and more preferably in a range of 40°C to 60°C.

The temperature of the second liquid is not particularly limited as long as the fats and oils are not solidified, but it is preferable that the temperature thereof is as low as possible in order to prevent oxidation of the fats and oils. For example, in a case where palm oil is used as the vegetable fats and oils, the temperature thereof is preferably in a range of 40°C to 60°C.

The granulated material coated with the first liquid is cooled before coating the second liquid. The cooling process is performed such that the temperature of the food granules is set to be lower than or equal to the temperature at which the animal fats and oils in the first liquid are solidified. For example, the minimum temperature of the granulated material during the cooling process is preferably 40°C or lower and more preferably in a range of 10°C to 35°C. It is possible to prevent the inner layer, formed by coating animal fats and oils, and the outer layer, formed by coating the outside of the inner layer with vegetable fats and oils, from being mixed with each other by performing such a cooling process.

The cooling method is not particularly limited, and a known method in the production of pet food, food products, or the like of the related art can be used.

For example, a method of cooling the granulated material by conveying the granulated material using a net conveyor or the like or a method of cooling the granulated material while conveying the granulated material is preferable from the viewpoint of production efficiency. Particularly, the efficiency becomes excellent when air at room temperature or cool air is applied to the granulated material while the granulated material is conveyed, which is more preferable.

The food granules may be heated after the granulated material has cooled and before the granulated material becomes coated with the second liquid.

In the embodiment of the coating process, it is preferable that the granulated material is coated with the first liquid and cooled while the granulated material is conveyed.

Specifically, a method of spraying the first liquid to the granulated material obtained by the granulation process while conveying the granulated material using a net conveyor and then cooling the granulated material while conveying the granulated material is preferable. According to such a method, it is possible to prevent the generation of fine powder (dusting) from food granules during the conveyance.

### [Process of adding external additive]

An external additive may be sequentially added to the food granules F obtained by the coating process.

For example, food granules F having a surface to which an external additive adheres can be obtained by coating the granulated material inside a container such as a tank with a liquid containing fats and oils, adding a powdery external additive to the inside of the container, and stirring the mixture.

### [Packaging process]

Pet food for cats is obtained by leaving the food granules F obtained in the above-described manner to be cooled as necessary, accommodating the food granules into a packaging container by a predetermined amount, and sealing the packaging container. As the packaging container, a container capable of holding the water content can be used.

Alternatively, pet food for cats may be obtained by mixing a predetermined amount of food granules F and a predetermined amount of other food granules, accommodating the obtained mixture into a packaging container, and then sealing the packaging container.

### [Effects]

Since the food granules F contain a humectant and have a high water content, the food granules F are softer than the dry type food granules in the related art. Further, despite the fact that the water content is high, excellent palatability for cats can be obtained by coating the food granules F with specific fats and oils. Therefore, it is desirable that the food granules F are provided to cats with no teeth or weak teeth due to old age, illness, or the like.

Moreover, when fats and oils having excellent oxidation stability with an iodine value of 100 or less are used as vegetable fats and oils to be applied to food granules, deterioration of the flavor with time is suppressed and excellent palatability is easily maintained.

Particularly from the viewpoint that the palatability for cats is more easily improved when the coating layer contains animal fats and oils, food granules F2 of the second example or food granules F3 of the embodiment, each of which has a coating layer containing animal fats and oils, are preferable.

In a case where the granulated material having a large water content is coated with animal fats and oils, a deterioration odor specific to animal fats and oils can easily be generated compared to a case where the granulated material has a small water content. However, since the surfaces of food granules F3 of the embodiment contain a large amount of vegetable fats and oils having excellent oxidation stability, it is more preferable in terms of reducing such deterioration odor.

Preferably, the food granules F do not have a softness which causes the granular material to be plastically deformed like clay but have an elasticity which allows the granular material not to be crushed under a certain degree of stress. Specifically, the breaking stress obtained from a measurement method described below is preferably in a range of 1 to 60 N, more preferably in a range of 5 to 50 N, and particularly preferably in a range of 10 to 40 N.

The water activity (Aw) of the food granules F is preferably 0.85 or less, more preferably 0.8 or less, and particularly preferably 0.7 or less. When the water activity thereof is less than or equal to the upper limit, a bacteriostatic action (action of suppressing the growth of bacteria) can be sufficiently obtained. The lower limit of the water activity (Aw) is not particularly limited, but practically 0.5 or greater.

### [Examples]

Hereinafter, the present invention will be described in detail using the following examples, but the present invention is not limited thereto.

### (Example 1 - Embodiment F3)

The present example is an example of producing the food granules F3 of the embodiment.

Raw ingredients listed in Table 1 were used. A glycerin aqueous solution having a concentration of 85% by mass was used as a humectant. The content of glycerin was 8.79% by mass with respect to the total content of food granules (total amount including additive water).

First, powder raw ingredients were mixed, liquid raw ingredients and additive water were added thereto, and the contents were mixed, thereby obtaining a raw ingredient mixture. The obtained raw ingredient mixture was put into an extruder and subjected to a heat treatment at a temperature of 90°C ± 10°C for approximately 4 minutes while being kneaded so that a starch component was pregelatinized, and then the resulting raw ingredient mixture was extruded and granulated into a granular shape from the outlet of the extruder and puffed at the same time with the extrusion granulation. At the outlet of the extruder, the kneaded product was extruded into a columnar shape from a hole (fish shape) having a diameter of 12 mm and was cut with a cutter into a granular shape such that the thickness of the columnar material became 4.5 mm.

The obtained granulated material was coated with a first liquid (crude beef tallow) and a second liquid (palm oil) in this order using the following method.

Specifically, the obtained granulated material (40°C) was conveyed by a net conveyor and the first liquid (60°C) was sprayed to the granulated material immediately after the conveyance started. Next, the granulated material (25°C) which was cooled by a method of blowing air at room temperature (25°C) thereto was accommodated into a coating container in a predetermined amount while the granulated material was continuously being conveyed. Further, the granulated material was heated to 50°C and coated with the second liquid (60°C) using a method of adding the second liquid to the granulated material and stirring the mixture. Subsequently, an external additive was added to the coating container and the mixture was stirred, thereby obtaining the food granules.

The food granules discharged from the coating container were cooled at room temperature for 12 hours, and then the water content and the water activity (Aw) thereof were measured according to the above-described methods. The breaking stress of the food granules was measured by the following method. The results thereof are listed in Table 1 (the same applies to hereinafter).

### (Example 2 - Second Example F2)

The present example is an example of producing the food granules F2 of the second example.

As listed in Table 1, the granulated material was produced with the same composition as in Example 1. In this case, a mixture (mixture of fats and oils) of crude beef tallow and palm oil was used as a coating solution.

The process performed to obtain the granulated material was the same as in Example 1. The obtained granulated material (40°C) was accommodated into a coating container in a predetermined amount and the mixture of fats and oils (60°C) was added and stirred to coat the granulated material. Subsequently, an external additive was added to the coating container and the mixture was stirred, thereby obtaining food granules.

### (Example 3 - First Example F1)

The present example is an example of producing the food granules F1 of the first example.

As listed in Table 1, the granulated material was produced with the same composition as in Example 1. In this case, only the second liquid (only palm oil) was used as a coating solution.

The process performed to obtain the granulated material was the same as in Example 1. The obtained granulated material (40°C) was accommodated into a coating container in a predetermined amount and the second liquid (60°C) was added and stirred to coat the granulated material. Subsequently, an external additive was added to the coating container and the mixture was stirred, thereby obtaining food granules.

### (Comparative Example 1)

The present embodiment is an example in which pet food for cats was produced without performing the coating process. Further, the total amount of raw ingredients was not set to 100% by mass so that it was easily understood that the composition of the raw ingredient mixture of Comparative Example 1 was the same as that in Examples 1 to 3 in Table 1.

In the present example, the granulated material was produced in the same manner as in Example 1 and the obtained granulated material was used as food granules as it was.

The water content and the breaking stress of the good granules were measured in the same manner as in Example 1.

### [Compression tester (measurement of breaking stress)]

The breaking stress when the food granules were compressed at a constant compression rate was measured under the following conditions using a compression tester (TEXTURE ANALYZER, model No: EZ-SX, manufactured by Shimadzu Corporation).
Plunger: wedge-shaped plunger having a tip with a thickness of 1 mm
Platform: flat dish
Compression rate: 60 m/min
Lowest point of plunger: 3 mm (gap between the flat dish and plunger)
Measurement temperature: 25°C

Specifically, one granule from the food granules to be measured was placed on the flat dish and the stress was measured while a plunger vertically pressed from the top of the granule at a constant rate. The peak value (maximum value) of the stress was read and recognized as the value of the breaking stress. The measurement was repeated with respect to 10 granules and the average value was determined from the recognized values.

The unit of the breaking hardness was converted into Newtons (N) by multiplying the numerical value of the breaking stress (unit: kgw) measured using the above-described compression tester, by 9.8.

### <Evaluation of palatability>

The palatability (preference) of pet food for cats was evaluated using the following method.

Pet food A was prepared for a palatability comparison.

A combination of pet food B for cats for evaluation and pet food A for cats for the palatability comparison was tested for 2 days by monitoring 20 cats.

On the first day, 20 g of each of pet food A and pet food B was fed to each cat at the same time, one from the left and the other from the right. The amount of pet food eaten by a cat was measured after a cat had eaten all of pet food A or pet food B, or after one hour from the start of feeding.

The amount of ingested pet food B and the amount of ingested pet food A for comparison were acquired in percentages based on the total weight of the pet food eaten by one cat during the first day. The percentages obtained from 20 cats that had been monitored were averaged and set as the result for the first day.

On the second day, 20 g of each of pet food A and pet food B was fed to each cat at the same time, one from the left side and the other from the right side. The amount of pet food eaten by a cat was measured after a cat had eaten all of pet food A or pet food B or after one hour from the start of feeding.

The amount of ingested pet food B and the amount of ingested pet food A for comparison were acquired in percentages based on the total weight of the pet food eaten by one cat during the second day. The percentages obtained from 20 cats that had been monitored were averaged and set as the result for the second day.

Finally, the results of the first and the second days were averaged, and the ratios of "the numerical value A:the numerical value B" (palatability) of the ingested amount of pet food A to the ingested amount of pet food B were acquired as the final results. It was indicated that cats being monitored had a good appetite for eating the pet food as the acquired numeric value of the palatability is high.

As the pet food A for the palatability comparison, commercially available dry type pet food for cats (listed in the following table as Reference Example 1) with excellent palatability for cats was used.

The results of the evaluation of palatability for each example are listed in Table 1.

**[Table 1]**

| | | | Example 1 | Example 2 | Example 3 | Comparative Example 1 | Reference Example 1 |
|---|---|---|---|---|---|---|---|
| Raw ingredient mixture [% by mass] | Powdery raw ingredients | Cereals | 37.01 | | | | |
| | | Meat (meals) | 25.38 | | | | |
| | | Beans | 3.76 | | | | |
| | | Fish | 3.76 | | | | |
| | | Brewer's yeast | 0.94 | | | | |
| | | Amino acids | 0.94 | | | | |
| | | Vitamins and minerals | 0.71 | | | | |
| | | Saccharides | 0.66 | | | | |
| | | Preservatives | 0.31 | | | | Commercially available dry type pet food |
| | | Colorants | 0.09 | | | | |
| | Liquid raw ingredients | Humectant (glycerin aqueous solution having concentration of 85% by mass) | 10.34 | | | | |
| | | Fats and oils (crude beef tallow) | 3.76 | | | | |
| | | Emulsifier | 0.09 | | | | |
| | Additive water | | 5.6 | | | | |
| Coating liquid | First liquid | Crude beef tallow | 1.5 | - | - | - | |
| | Second liquid | Palm oil | 2.0 | - | 3.5 | - | |
| | Mixture of fats and oils | Crude beef tallow | - | 1.5 | - | - | |
| | | Palm oil | - | 2.0 | - | - | |
| External additive (powdery) [% by mass] | | | 3.15 | 3.15 | 3.15 | - | |
| Total amount (including additive water) [% by mass] | | | 100.0 | 100.0 | 100.0 | (93.35) | |
| Food granules | Water content [% by mass] | | 13.2 | 13.2 | 13.2 | 14 | 8 |
| | Water activity (Aw) | | 0.61 | 0.61 | 0.61 | 0.63 | - |
| | Breaking stress [N] | | 32.3 | 32.3 | 32.3 | 32.3 | 110.74 |
| Palatability evaluation results (numerical value A:numerical value B) | | | 49:51 | 50:50 | 60:40 | 80:20 | (pet food A) |

As shown in the results in Table 1, the water contents of the food granules of pet food for cats of Examples 1 to 3 and Comparison Example 1 were higher than that of the dry type pet food for cats of the related art.

In Comparative Example 1 in which the granulated material was not coated, the palatability was inferior to the palatability of the dry type pet food for cats of Reference Example 1.

In Example 3 in which the same granulated material as in Comparative Example 1 was coated with vegetable fats and oils and Examples 1 and 2 in which the granulated material was coated with animal fats and oils and vegetable fats and oils, the palatability for cats was improved compared to the pet food of Comparative Example 1.

Particularly in Examples 1 and 2, excellent palatability similar to the palatability of the dry type pet food for cats of Reference Example 1 was obtained even though the water content of food granules was higher than that of the dry type pet food for cats of Reference Example 1.

### Industrial Applicability

According to the present invention, pet food for cats which is formed of granules softer than those of dry type pet food for cats of the related art and has excellent palatability can be obtained. Therefore, the present invention is extremely useful industrially.

## Claims

1. Granular pet food for cats which has a product water content of 10% to 30% by mass, comprising:
food granules, each of which contains a humectant and has a coating layer on a surface or in the vicinity of the surface thereof,
wherein the coating layer includes an inner layer formed by coating a first liquid containing fats and oils and an outer layer formed by coating the outside of the inner layer with a second liquid containing fats and oils,
the fats and oils contained in the first liquid contains animal fats and oils, and
the fats and oils contained in the second liquid contains only vegetable fats and oils, and
wherein the coating layer contains vegetable fats and oils having an iodine value of 100 or less.

2. The pet food for cats according to claim 1,
wherein the vegetable fats and oils contain palm oil.

3. The pet food for cats according to claim 1 or 2,
wherein the food granules contain 5% to 20% by mass of the humectant, and
the water content thereof is in a range of 10% to 16% by mass.

4. A method of producing the pet food for cats according to claim 1, comprising:
a granulation process of granulating a raw ingredient mixture to obtain a granulated material; and
a process of coating the granulated material with the first liquid, cooling the granulated material, and coating the granulated material with the second liquid without performing a drying process.

5. The method of producing pet food for cats according to claim 4,
wherein the coating of the granulated material with the first liquid and the cooling are performed while conveying the granulated material.

## Patentansprüche

1. Granuläres Haustierfutter für Katzen, das einen Produktwassergehalt von 10 Massen-% bis 30 Massen-% aufweist, umfassend:
Futtergranalien, von denen jede ein Feuchthaltemittel enthält und eine Beschichtungsschicht auf einer Oberfläche oder in der Umgebung der Oberfläche davon aufweist,
wobei die Beschichtungsschicht eine durch Beschichten einer ersten Flüssigkeit, enthaltend Fette und Öle, gebildete Innenschicht und eine durch Beschichten der Außenseite der Innenschicht mit einer zweiten Flüssigkeit, enthaltend Fette und Öle, gebildete Außenschicht einschließt,
die in der ersten Flüssigkeit enthaltenen Fette und Öle enthalten tierische Fette und Öle, und
die in der zweiten Flüssigkeit enthaltenen Fette und Öle enthalten nur pflanzliche Fette und Öle, und
wobei die Beschichtungsschicht pflanzliche Fette und Öle mit einem Iodwert von 100 oder weniger enthält.

2. Haustierfutter für Katzen nach Anspruch 1, wobei die pflanzlichen Fette und Öle Palmöl enthalten.

3. Haustierfutter für Katzen nach Anspruch 1 oder 2, wobei die Futtergranalien 5 Massen-% bis 20 Massen-% des Feuchthaltemittels enthalten und der Wassergehalt davon im Bereich von 10 Massen-% bis 16 Massen-% liegt.

4. Verfahren zum Herstellen des Haustierfutters für Katzen nach Anspruch 1, umfassend:
ein Granulierverfahren zum Granulieren eines Gemischs aus Rohbestandteilen zum Erhalt eines granulierten Materials; und
ein Verfahren zum Beschichten des granulierten Materials mit der ersten Flüssigkeit, Abkühlen des granulierten Materials und Beschichten des granulierten Materials mit der zweiten Flüssigkeit ohne Durchführung eines Trocknungsverfahrens.

5. Verfahren zum Herstellen von Haustierfutter für Katzen nach Anspruch 4, wobei die Beschichtung des granulierten Materials mit der ersten Flüssigkeit und das Abkühlen während der Beförderung des granulierten Materials durchgeführt wird.

## Revendications

1. Aliment en granulés pour animaux de compagnie destiné aux chats ayant une teneur en eau en masse qui va de 10 % à 30 % et comprenant :
des granules alimentaires contenant chacun un agent humectant et ayant une couche d'enduction sur une surface ou à proximité de la surface de ceux-ci,
où la couche d'enduction inclut une couche interne formée en enduisant un premier liquide contenant des graisses et des huiles et une couche externe formée en enduisant l'extérieur de la couche interne avec un deuxième liquide contenant des graisses et des huiles,
les graisses et les huiles contenues dans le premier liquide contiennent des graisses et des huiles animales et
les graisses et les huiles contenues dans le deuxième liquide contiennent uniquement des graisses et des huiles végétales et
où la couche d'enduction contient des graisses et des huiles végétales ayant un indice d'iode inférieur ou égal à 100.

2. Aliment pour animaux de compagnie destiné aux chats de la revendication 1,
où les graisses et les huiles végétales contiennent de l'huile de palme.

3. Aliment pour animaux de compagnie destiné aux chats de la revendication 1 ou 2,
où les granules alimentaires contiennent de 5 % à 20 % en masse de l'agent humectant et
où la teneur en eau est donc dans une plage qui va de 10 % à 16 % en masse.

4. Procédé de production de l'aliment pour animaux de compagnie destiné aux chats de la revendication 1, comprenant :
un processus de granulation consistant à granuler un mélange d'ingrédients bruts pour obtenir un matériau granulé ; et
un processus d'enduction du matériau granulé avec le premier liquide, de refroidissement du matériau granulé et d'enduction du matériau granulé avec le deuxième liquide sans effectuer un processus de séchage.

5. Procédé de production de l'aliment pour animaux de compagnie destiné aux chats de la revendication 4,
où l'enduction du matériau granulé avec le premier liquide et le refroidissement sont effectués alors que le matériau granulé est entraîné sur un convoyeur.
